# EUROPÄISCHE PATENTSCHRIFT

(11) **EP 1 780 170 B1**
(45) Veröffentlichungstag und Bekanntmachung des Hinweises auf die Patenterteilung: **28.09.2011**
(21) Anmeldenummer: 06020858.4
(22) Anmeldetag: 04.10.2006
(51) Int. Cl.: B66F 9/06, B66F 9/10

(54) **Flutförderzeug mit einer bewegbaren Aufstandsfläche für einen Batterieblock**
Industrial truck with movable resting surface for a battery block
Chario élévateur avec une surface mobile de support d' un bloc de batterie

(30) Priorität: 25.10.2005 DE 102005051058
(43) Veröffentlichungstag der Anmeldung: 02.05.2007
(73) Patentinhaber: STILL GmbH, 22113 Hamburg (DE)
(72) Erfinder: Lundelius, Jens, 22929 Schönberg (DE)
(74) Vertreter: Geirhos, Johann

(56) Entgegenhaltungen:
- EP-A- 1 661 847
- DE-A1- 2 164 072
- DE-A1- 10 241 418
- JP-A- 8 165 094

## Beschreibung

Die Erfindung betrifft ein Flurförderzeug, insbesondere Gegengewichtsgabelstapler, mit einem innerhalb eines Fahrzeugrahmens angeordneten Batterieblock, der zum Durchführen eines Batteriewechsels mittels einer im Bereich des Bodens des Batteriefachs angeordneten Rollenbahn relativ zum Fahrzeugrahmen in einer horizontalen Bewegungsrichtung bewegbar ist.

Flurförderzeuge mit einer seitlichen Batterieentnahmeöffnung sind häufig mit einer Rollenbahn ausgerüstet, auf der ein Batterieblock mit relativ geringem Kraftaufwand verschoben werden kann. Um den Batterieblock vollständig aus dem Batteriefach heraus bewegen zu können, wird bei Flurförderzeugen des Standes der Technik neben dem Flurförderzeug eine externe Rollenbahn angeordnet, die dann an die zu dem Flurförderzeug gehörende Rollenbahn anschließt. Alternativ ist es bekannt, die in dem Flurförderzeug angeordnete Rollenbahn ausziehbar zu gestalten. Zur Durchführung eines Batteriewechsels wird dabei zuerst die Rollenbahn ausgezogen und anschließend wird der Batterieblock auf der ausgezogenen Rollenbahn vollständig aus dem Batteriefach heraus bewegt. Eine solche Anordnung ist beispielsweise in der DE 102 41 418 A1 beschrieben. Der vollständig aus dem Batteriefach des Flurförderzeugs heraus bewegte Batterieblock kann dann beispielsweise mit einem Hallenkran angehoben und weiter transportiert werden. Ein Einsetzen eines neuen Batterieblocks in das Flurförderzeug erfolgt in umgekehrter Reihenfolge.

Aus der EP 1 661 847 A1 die nachveröffentlichten Stand der Technik darstell, ist ein Flurförderzeug nach dem Oberbegriff des Anspruchs 1 bekannt.

Der vorliegenden Erfindung liegt die Aufgabe zugrunde, ein Flurförderzeug mit einer anderen, einfach aufgebauten und sicheren Vorrichtung zur seitlichen Batterieentnahme zur Verfügung zu stellen.

Diese Aufgabe wird erfindungsgemäß dadurch gelöst, dass der Batterieblock mit einer zwischen der Rollenbahn und dem Batterieblock angeordneten Aufstandsfläche an der Rollenbahn geführt ist, wobei der Batterieblock, die Aufstandsfläche und die Rollenbahn getrennte Bauteile darstellen, die Aufstandsfläche an der Rollenbahn in Bewegungsrichtung verschiebbar geführt ist und die Aufstandsfläche derart ausgebildet ist, dass die Position des Batterieblocks relativ zur Aufstandsfläche in horizontaler Richtung festgelegt ist. Bei der erfindungsgemäßen Anordnung kann ein standardisierter Batterieblock verwendet werden, der keinerlei speziell angepasste Führungselemente aufweist. Dieser Batterieblock steht auf der Aufstandsfläche, welche den Batterieblock in horizontaler Richtung formschlüssig festlegt. Während des Betriebs des Flurförderzeugs ist die Aufstandsfläche innerhalb des Flurförderzeugs festgelegt, wodurch ein Verrutschen des Batterieblocks sicher verhindert ist. Während eines Batteriewechsels kann die Aufstandsfläche gemeinsam mit dem Batterieblock auf der Rollenbahn verschoben werden. Wenn sich der Batterieblock auf der Rollenbahn vollständig außerhalb des Flurförderzeugs befindet, kann der Batterieblock beispielsweise mittels eines Krans von der Aufstandsfläche abgehoben werden.

Die Unterseite der Aufstandsfläche weist mindestens eine Schiene auf, die mit den Rollen der Rollenbahn derart in Eingriff steht, dass eine Relativbewegung zwischen der Aufstandsfläche und der Rollenbahn ausschließlich in Bewegungsrichtung möglich ist. Die Schiene erstreckt sich parallel zur Bewegungsrichtung der Aufstandsfläche. Die Aufstandsfläche ist mittels der Schiene derart an der Rollenbahn geführt, dass die Aufstandsfläche nur in Bewegungsrichtung verschoben werden kann. Jede andere horizontale Bewegung der Aufstandsfläche relativ zur Rollenbahn, beispielsweise eine Rotationsbewegung oder eine Translationsbewegung senkrecht zur Bewegungsrichtung, ist durch die Führung verhindert.

Gemäß einer möglichen Ausführungsform der Erfindung weist die Schiene mindestens eine im Wesentlichen senkrecht ausgerichtete Führungsfläche auf. Die Führungsfläche ist zur Aufnahme von Seitenkräften geeignet, also von Kräften senkrecht zur Bewegungsrichtung der Aufstandsfläche.

Mindestens eine Rolle weist mindestens eine Stirnfläche auf, die zumindest zeitweise mit einer der Führungsflächen der Schiene in Kontakt steht. Die Stirnfläche der Rolle ist senkrecht zur Rotationsachse der Rolle ausgerichtet. Die zur Führung der Aufstandsfläche erforderlichen Kräfte wirken damit zwischen der Stirnfläche der Rolle und der senkrechten Führungsfläche.

Gemäß einer zweckmäßigen Weiterbildung der Erfindung weist die Aufstandsfläche zum Festlegen der Position des Batterieblocks mindestens ein Paar gegenüberliegender Seitenflächen auf, wobei die Seitenflächen trichterförmig angeordnet sind. Vorzugsweise sind insgesamt vier Seitenflächen vorhanden, also jeweils eine Seitenfläche an jeder Seite der im Wesentlichen rechteckigen Aufstandsfläche. Die Seitenflächen sind trichterförmig angeordnet. Dies bedeutet, dass die Oberkanten der gegenüberliegenden Seitenflächen weiter voneinander beabstandet sind, als deren Unterkanten. Die trichterförmige Anordnung erleichtert ein Aufsetzen des Batterieblocks auf die Aufstandsfläche, wobei der Batterieblock durch die Seitenflächen zentriert wird. Weiter nehmen die Seitenflächen die während des Betriebs des Flurförderzeugs auf den Batterieblock wirkenden horizontalen Kräfte auf und verhindern so ein Verrutschen des Batterieblocks innerhalb des Batteriefachs.

Eine besonders vorteilhafte Ausgestaltung der Erfindung liegt vor, wenn die Rollenbahn teleskopisch ausfahrbar ist. Auf der ausgefahrenen Rollenbahn kann die Aufstandsfläche gemeinsam mit dem Batterieblock vollständig aus dem Flurförderzeug heraus bewegt werden. Die Aufstandsfläche ist dabei zunächst an dem innerhalb des Flurförderzeugs befindlichen Teil der Rollenbahn und dann an dem außerhalb des Flurförderzeugs befindlichen Teil derart geführt, dass eine horizontale Bewegung der Aufstandsfläche ausschließlich in der definierten Bewegungsrichtung möglich ist.

Mit besonderem Vorteil ist die Aufstandsfläche in ihrer Position vollständig innerhalb des Flurförderzeugs ausschließlich an einem nicht ausfahrbaren Teil der Rollenbahn geführt und ist die Aufstandsfläche in ihrer Position vollständig außerhalb des Flurförderzeugs zumindest teilweise an einem ausfahrbaren Teil der Rollenbahn geführt, wobei die Aufstandsfläche an dem ausfahrbaren Teil der Rollenbahn mit einem größeren Spiel geführt ist als an dem nicht ausfahrbaren Teil. Hierdurch ist sichergestellt, dass die Position der Aufstandsfläche während des Betriebs des Flurförderzeugs ausschließlich durch den nicht ausfahrbaren Teil der Aufstandsfläche festgelegt ist. Während des Betriebs des Flurförderzeugs wirken damit keine Massekräfte des Batterieblocks auf den ausfahrbaren Teil der Rollenbahn. Dies gewährleistet, dass ein Ausziehen der Rollenbahn stets mit geringem Kraftaufwand möglich ist.

Möglich ist es auch, das Flurförderzeug mit einer nicht ausfahrbaren Rollenbahn auszustatten. Zur Durchführung eines Batteriewechsels muss dann eine externe Rollenbahn neben dem Batteriefach angeordnet werden, welche die nicht ausfahrbare interne Rollenbahn verlängert. Die Aufstandsfläche mit dem Batterieblock kann dann von der internen auf die externe Rollenbahn geschoben werden, wobei die Aufstandsfläche sowohl an der internen als auch an der externen Rollenbahn derart geführt ist, sodass eine horizontale Bewegung der Aufstandsfläche ausschließlich in der definierten Bewegungsrichtung möglich ist.

Weitere Vorteile und Einzelheiten der Erfindung werden anhand des in den schematischen Figuren dargestellten Ausführungsbeispiels näher erläutert.

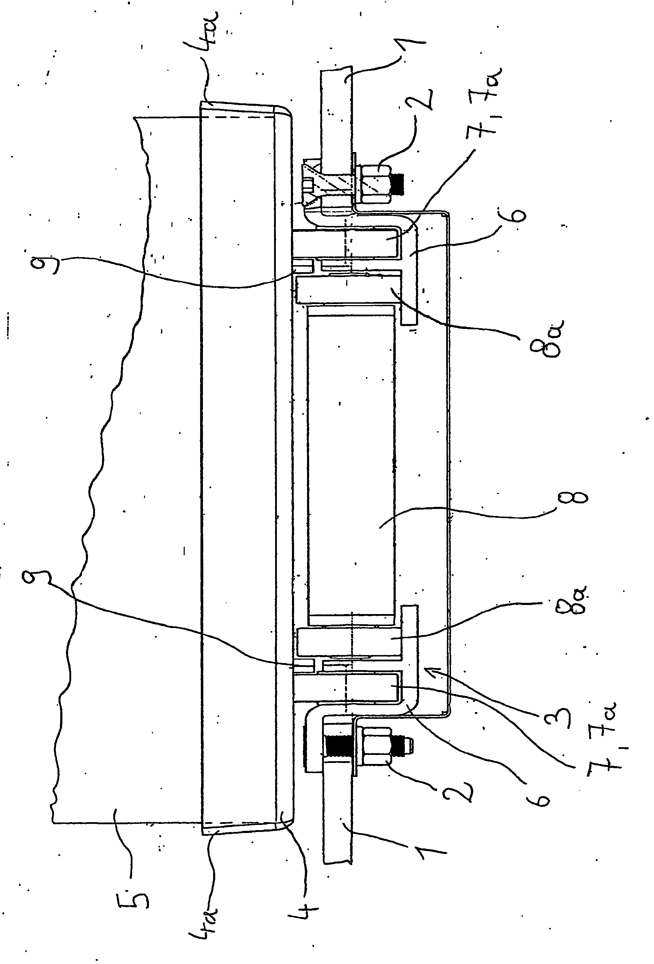

Die Figur zeigt die Batterieaufnahme eines erfindungsgemäßen Flurförderzeugs. An einem Rahmenbauteil 1 des Flurförderzeugs ist mittels einer Schraubenverbindung 2 eine ausziehbare Rollenbahn 3 befestigt. Eine Aufstandsfläche 4 für einen Batterieblock 5 ist auf die Rollenbahn 3 aufgesetzt und kann auf der Rollenbahn 3 verschoben werden.

Die Rollenbahn 3 weist als kraftaufnehmendes Bauteil einen Tragköper 6 auf, der sich an dem Rahmenbauteil 1 abstützt und an dem die Rollen 7a eines nicht ausfahrbaren Teils 7 der Rollenbahn 3 drehbar gelagert sind. Ein ausfahrbarer Teil 8 der Rollenbahn 3 ist senkrecht zur Zeichenebene bewegbar. Die Rollen 8a des ausfahrbaren Teils 8 rollen an dem Tragkörper 6 ab. In eingefahrener Position befindet sich der ausfahrbare Teil 8 der Rollenbahn 3 vollständig innerhalb des Flurförderzeugs. Das Eigengewicht des ausfahrbaren Teils 8 wird dabei vollständig von dem Tragkörper 6 getragen.

Um einen Batteriewechsel durchzuführen, wird der ausfahrbare Teil 8 aus dem Flurförderzeugs heraus gezogen. In vollständig ausgezogener Position sind die Rollen 8a des ausfahrbaren Teils 8 frei drehbar. Das Eigengewicht des ausgefahrenen Teils 8, sowie gegebenenfalls das Gewicht eines sich darauf abstützenden Batterieblocks 5 wird teilweise an dem Tragkörper 8 und teilweise mittels einer herunterklappbaren Stütze direkt an der Fahrbahn abgestützt.

Bei ausgezogener Rollenbahn kann die Aufstandsfläche 4 von den Rollen 7a des nicht ausfahrbaren Teils 7 auf die Rollen 8a des ausfahrbaren Teils 8 bewegt werden, und umgekehrt. Die Führung der Aufstandsfläche 4 erfolgt dabei mittels zweier an der Aufstandsfläche 4 befestigter Schienen 9. Wenn sich die Aufstandsfläche 4 auf dem nicht ausfahrbaren Teil 7 der Rollenbahn 3 befindet, sind die Schienen an den inneren Stimflächen der Rollen 7a geführt. Wenn sich die Aufstandsfläche 4 über dem ausgefahrenen Teil 8 befindet, erfolgt die Führung an den äußeren Stirnflächen der Rollen 8a. Das Spiel zwischen den Führungsschienen 9 und den Rollen 8a ist größer als das Spiel zwischen den Führungsschienen 9 und den Rollen 7a. Dadurch ist sichergestellt, dass die während des Betriebs des Flurförderzeugs auf den Batterieblock 5 wirkenden Horizontalkräfte nicht auf die Rollen 8a wirken. Dies stellt sicher, dass der ausfahrbare Teil 8 stets mit geringer Betätigungskraft ausfahrbar ist. Ein Einschieben der Aufstandsfläche 4 von dem ausfahrbaren Teil 8 auf den nicht ausfahrbaren Teil 7 der Rollenbahn wird durch Einführschrägen an den Führungsschienen 9 erleichtert.

Der Batterieblock 5 ist relativ zur Aufstandsfläche 4 durch deren Seitenflächen 4a in alle horizontalen Richtungen festgelegt. Die Seitenflächen 4a sind trogförmig angeordnet, sodass beispielsweise ein Aufsetzen des Batterieblocks 5 auf die Aufstandfläche 4 mittels eines Krans erleichtert wird.

## Patentansprüche

1. Flurförderzeug, insbesondere Gegengewichtsgabelstapler, mit einem innerhalb eines Fahrzeugrahmens (1) angeordneten Batterieblock (5), der zum Durchführen eines Batteriewechsels mittels einer im Bereich des Bodens des Batteriefachs angeordneten Rollenbahn (3) relativ zum Fahrzeugrahmen in einer horizontalen Bewegungsrichtung bewegbar ist, wobei der Batterieblock (5) mit einer zwischen der Rollenbahn (3) und dem Batterieblock (5) angeordneten Aufstandsfläche (4) an der Rollenbahn (3) geführt ist, die Aufstandsfläche (4) an der Rollenbahn (3) in Bewegungsrichtung verschiebbar geführt ist und die Aufstandsfläche (4) derart ausgebildet ist, dass die Position des Batterieblocks (5) relativ zur Aufstandsfläche (4) in horizontaler Richtung festgelegt ist,
**dadurch gekennzeichnet,**
**dass** der Batterieblock (5), die Aufstandsfläche (4) und die Rollenbahn (3) getrennte Bauteile darstellen.

2. Flurförderzeug nach Anspruch 1, **dadurch gekennzeichnet, dass** die Unterseite der Aufstandsfläche (4) mindestens eine Schiene (9) aufweist, die mit den Rollen (7a, 8a) der Rollenbahn (3) derart in Eingriff steht, dass eine Relativbewegung zwischen der Aufstandsfläche (4) und der Rollenbahn (3) ausschließlich in Bewegungsrichtung möglich ist.

3. Flurförderzeug nach Anspruch 2, **dadurch gekennzeichnet, dass** die Schiene (9) mindestens eine im Wesentlichen senkrecht ausgerichtete Führungsfläche aufweist.

4. Flurförderzeug nach Anspruch 3, **dadurch gekennzeichnet, dass** mindestens eine Rolle (7a, 8a) mindestens eine Stirnfläche aufweist, die zumindest zeitweise mit einer der Führungsflächen der Schiene (9) in Kontakt steht.

5. Flurförderzeug nach einem der Ansprüche 1 bis 4, **dadurch gekennzeichnet, dass** die Aufstandsfläche (4) zum Festlegen der Position des Batterieblocks (5) mindestens ein Paar gegenüberliegender Seitenflächen (4a) aufweist, wobei die Seitenflächen (4a) trichterförmig angeordnet sind.

6. Flurförderzeug nach einem der Ansprüche 1 bis 5, **dadurch gekennzeichnet, dass** die Rollenbahn (3) teleskopisch ausfahrbar ist.

7. Flurförderzeug nach Anspruch 6, **dadurch gekennzeichnet, dass** die Aufstandsfläche (4) in ihrer Position vollständig innerhalb des Flurförderzeugs Ausschließlich an einem nicht ausfahrbaren Teil (7) der Rollenbahn (3) geführt ist
und die Aufstandsfläche (4) in ihrer Position vollständig außerhalb des Flurförderzeugs zumindest teilweise an einem ausfahrbaren Teil (8) der Rollenbahn (3) geführt ist, wobei die Aufstandsfläche (4) an dem ausfahrbaren Teil (8) der Rollenbahn (3) mit einem größeren Spiel geführt ist als an dem nicht ausfahrbaren Teil (7).

## Claims

1. Industrial truck, in particular counterweight forklift truck, with a battery pack (5), which is arranged within a vehicle frame (1) and can be moved relative to the vehicle frame in a horizontal movement direction by means of a roller conveyor (3), which is arranged in the region of the bottom of the battery compartment, in order to perform a change of battery, the battery pack (5) being guided on the roller conveyor (3) by a resting surface (4), which is arranged between the roller conveyor (3) and the battery pack (5), the resting surface (4) being guided on the roller conveyor (3) in such a way that it can be shifted in the movement direction, and the resting surface (4) being designed in such a way that the position of the battery pack (5) relative to the resting surface (4) is fixed in the horizontal direction, **characterized in that** the battery pack (5), the resting surface (4) and the roller conveyor (3) represent separate component parts.

2. Industrial truck according to Claim 1, **characterized in that** the lower side of the resting surface (4) has at least one rail (9), which engages with the rollers (7a, 8a) of the roller conveyor (3) in such a way that a relative movement between the resting surface (4) and the roller conveyor (3) is possible exclusively in the movement direction.

3. Industrial truck according to Claim 2, **characterized in that** the rail (9) has at least one substantially perpendicularly aligned guide surface.

4. Industrial truck according to Claim 3, **characterized in that** at least one roller (7a, 8a) has at least one end face, which is at least temporarily in contact with one of the guide surfaces of the rail (9).

5. Industrial truck according to one of Claims 1 to 4, **characterized in that** the resting surface (4) has at least one pair of mutually opposite side faces (4a) for fixing the position of the battery pack (5), the side faces (4a) being arranged in the form of a funnel.

6. Industrial truck according to one of Claims 1 to 5, **characterized in that** the roller conveyor (3) can be extended telescopically.

7. Industrial truck according to Claim 6, **characterized in that** the resting surface (4) is guided in terms of its position completely within the industrial truck exclusively on a non-extendable part (7) of the roller conveyor (3), and the resting surface (4) is guided in terms of its position completely outside the industrial truck at least partially on an extendable part (8) of the roller conveyor (3), the resting surface (4) being guided on the extendable part (8) of the roller conveyor (3) with greater play than on the non-extendable part (7).

## Revendications

1. Chariot élévateur, en particulier chariot élévateur à fourche à contrepoids, comprenant un bloc-batterie (5) disposé à l'intérieur du châssis d'un véhicule (1), qui peut être déplacé par rapport au châssis du véhicule dans une direction de déplacement horizontale pour effectuer un changement de batterie au moyen d'une piste à rouleaux (3) disposée dans la région du fond du compartiment de batterie, le bloc-batterie (5) étant guidé sur la piste à rouleaux (3) avec une surface d'appui (4) disposée entre la piste à rouleaux (3) et le bloc-batterie (5), la surface d'appui (4) étant guidée sur la piste à rouleaux (3) de manière déplaçable dans la direction de déplacement et la surface d'appui (4) étant réalisée de telle sorte que la position du bloc-batterie (5) soit fixée par rapport à la surface d'appui (4) dans la direction horizontale,
**caractérisé en ce que**
le bloc-batterie (5), la surface d'appui (4) et la piste à rouleaux (3) constituent des composants séparés.

2. Chariot élévateur selon la revendication 1, **caractérisé en ce que** le côté inférieur de la surface d'appui (4) présente au moins un rail (9), qui est en prise avec les rouleaux (7a, 8a) de la piste à rouleaux (3) de telle sorte qu'un mouvement relatif entre la surface d'appui (4) et la piste à rouleaux (3) soit possible uniquement dans la direction de déplacement.

3. Chariot élévateur selon la revendication 2, **caractérisé en ce que** le rail (9) présente au moins une surface de guidage orientée essentiellement verticalement.

4. Chariot élévateur selon la revendication 3, **caractérisé en ce qu'**au moins un rouleau (7a, 8a) présente au moins une surface frontale qui est au moins temporairement en contact avec l'une des surfaces de guidage du rail (9).

5. Chariot élévateur selon l'une quelconque des revendications 1 à 4, **caractérisé en ce que** la surface d'appui (4) présente au moins une paire de surfaces latérales opposées (4a) pour la fixation de la position du bloc-batterie (5), les surfaces latérales (4a) étant disposées en forme d'entonnoir.

6. Chariot élévateur selon l'une quelconque des revendications 1 à 5, **caractérisé en ce que** la piste à rouleaux (3) peut être déployée de manière télescopique.

7. Chariot élévateur selon la revendication 6, **caractérisé en ce que** la surface d'appui (4) est guidée dans sa position complètement à l'intérieur du chariot élévateur uniquement sur une partie (7) de la piste à rouleaux (3) non déployable, et la surface d'appui (4) dans sa position complètement à l'extérieur du chariot élévateur est guidée au moins en partie sur une partie déployable (8) de la piste à rouleaux (3), la surface d'appui (4) étant guidée sur la partie déployable (8) de la piste à rouleaux (3) avec un jeu plus grand que sur la partie non déployable (7).
